## Europäisches Patentamt
## European Patent Office
## Office européen des brevets

(19)

(11) Veröffentlichungsnummer: **0 008 384**
**B1**

(12) **EUROPÄISCHE PATENTSCHRIFT**

(45) Veröffentlichungstag der Patentschrift: **23.06.82**

(21) Anmeldenummer: **79102669.3**

(22) Anmeldetag: **26.07.79**

(51) Int. Cl.³: **B 60 H 1/00, G 05 D 23/24**

(54) **Heiz- und Lüftungseinrichtung für elektrische Nahverkehrsfahrzeuge.**

(30) Priorität: **10.08.78 DE 2835137**

(43) Veröffentlichungstag der Anmeldung:
**05.03.80 Patentblatt 80/5**

(45) Bekanntmachung des Hinweises auf die Patenterteilung:
**23.06.82 Patentblatt 82/25**

(84) Benannte Vertragsstaaten:
**AT CH NL**

(56) Entgegenhaltungen:
**CH - A - 375 040**
**DE - A - 1 960 056**
**DE - A - 2 634 015**
**DE - A - 2 636 195**
**DE - A - 2 710 766**
**DE - A - 2 724 449**
**DE - B - 1 008 343**
**US - A - 3 658 244**

(73) Patentinhaber: **SIEMENS AKTIENGESELLSCHAFT**
**Berlin und München**
**Postfach 22 02 61**
**D-8000 München 22 (DE)**

(72) Erfinder: **Rapp, Karl**
**Friedrich-Bauer-Strasse 20**
**D-8520 Erlangen (DE)**
Erfinder: **Choschzick, Joachim**
**Renesstrasse 21**
**D-8520 Erlangen (DE)**

Courier Press, Leamington Spa, England.

Heiz- und Lüftungseinrichtung für elektrische
Nahverkehrsfahrzeuge

Die Erfindung bezieht sich auf eine Heiz- und Lüftungseinrichtung für ein elektrisches Fahrzeug, das einen in den Fahrgastraum führenden Luftkanal und eine vom Fahrgastraum ins Freie führende Öffnung besitzt, wobei der Luftkanal mit einem Lüfter und einem Lufterhitzer versehen ist, welcher durch einen sekundären Wärmetauscher gebildet ist, der über eine Rohrleitung mit Umwälzpumpe an einem primären Wärmetauscher für die Aufnahme der Heizenergie angeschlossen ist, dessen flüssiger Wärmeträger zum Beeinflussen der Temperatur im Wageninneren durch Eingriff in seinen Umlauf steuerbar ist.

Aus der Zeitschrift "Eisenbahntechnische Rundschau" 1960, Seiten 90 bis 96, insbesondere Bild 49 ist eine Heiz- und Lüftungseinrichtung dieser Art bekannt, bei der der primäre Wärmetauscher für die Aufnahme der Heizenergie als Heißwasserbereiter ausgebildet ist.

Dieser Heißwasserbereiter kann durch eine Ölfeuerung oder elektrisch beheizt werden. Zusätzlich zu dem sekundären Wärmespeicher in dem zum Fahrgastraum führenden Luftkanal sind weitere sekundäre Wärmetauscher vorgesehen, die in den einzelnen Zugabteilen vor den Luftaustrittsöffnungen des Luftkanals angeordnet sind. Die von dem ersten sekundären Wärmetauscher aufgeheizte Luft wird also beim Eintritt in die einzelnen Zugabteile nochmals beheizt.

In den Nahverkehrsfahrzeugen wird meist erwärmte Luft über steuerbare Klappen und/oder Mischkammern mit Bypass ganz oder teilweise dem Wageninnenraum zugeführt (DE—OS 20 06 802). Dabei sind in einem Luftkanal Wärmetauscher oder Anfahr- oder Bremswiderstände angeordnet, deren Verlustwärme zum Aufheizen der in das Wageninnere eingeblasenen Luft ausgenutzt wird. Für eine Vor- und Zusatzheizung werden sogenannte Frischstromheizkörper in Stufen zugeschaltet, wobei die Heizenergie dem Netz entnommen wird.

Durch die US—A—2 258 779 ist eine Heiz- und Lüftungseinrichtung für ein elektrisches Fahrzeug bekannt, bei der im Luftkanal ein sekundärer Wärmetauscher angeordnet ist, der mit einem in einem elektrisch beheizten Wasserkessel angeordneten primären Wärmetauscher verbunden ist, dessen dampfförmiger Wärmeträger zum Beeinflussen der Temperatur im Wageninneren durch einen Thermostat gesteuert wird. Dabei wird der Umlauf des Wärmeträgers bei Erreichen der gewünschten Raumtemperatur gedrossel, aber nicht abgeschaltet.

Bei der durch die DE—C—738 181 bekannten Warmwasserumlaufheizung für Eisenbahnwagen sind die in Abteilen angeordneten Warmwasserheizkörper mit einem Wasserkessel verbunden, der elektrisch oder mit Dampf beheizt wird. Hier werden abhängig von der Wassertemperatur im Kessel und der Außentemperatur die Heizmittel elektrischer Strom bzw. Dampf in Intervallen zu- und abgeschaltet. Ein in den einzelnen Abteilen angeordneter Thermostat sorgt für eine kontinuierliche Steuerung des Wärmeträgerumlaufs vom Wasserkessel zu den Heizkörpern.

Gemäß der deutschen Patentanmeldung V 33 70 werden in Fahrzeugen die im allgemeinen unter den Sitzbänken angeordneten Heizkörper durch periodisches Zu- und Abschalten mit einer stets gleichbleibenden Energiemenge gespeist. Eine derartige Leistungsregelung vermeidet im Gegensatz zu einer Temperaturregelung, daß durch das Öffnen eines Fensters ein gewünschter Temperaturabfall eintritt und nicht etwa—wie der der Temperaturregelung—die Energiezufuhr erhöht wird. Durch Verändern des Verhältnisses der Einschaltzeit zur Abschaltzeit läßt sich die Energiezufuhr regeln und damit die Temperatur in gewisser Weise einstellen. Hierzu ist ein Impulsgeber vorgesehen, der z.B. als beheizter Bimetallstreifen ausgebildet ist, bei dem die Beheizung des Bimetallstreifens oder der Abstand der Bimetallkontakte entsprechend verstellt wird, so daß sich das Verhältnis der Einschaltzeit zur gesamten Schaltperiode des Reglers und damit die zugeführte Energie ändern läßt. Ist die Heizung als Warmluftheizung ausgebildet, so werden bei dieser bekannten Einrichtung Drosselklappen im Takte der Reglerkontakte gesteuert.

Bei der Anordnung nach der DE—C—10 08 343 wird die mit dem Antrieb oder der Bremsung eines elektrischen Fahrzeuges auftretende Verlustwärme dadurch zur Heizung ausgenutzt, daß ein über elektrische Widerstandselemente geführter Luftstrom durch Steuerung von Klappen nur zu einem Teil dem zu beheizenden Raum zugeführt wird. Dabei kann durch Umkehrung der Drehrichtung des Lüfters und Umsteuern von Klappen im Sommerbetrieb die Luft aus dem Wageninneren abgesaugt und zur Kühlung der Anfahr- und Bremswiderstände verwendet werden. Eine derartige Luftführung über steuerbare Klappen und/oder Mischkammern mit Bypaß wird meist auch bei Nahverkehrsfahrzeugen eingesetzt.

Mit diesen bekannten Einrichtungen läßt sich jedoch nicht immer eine befriedigende Regelung der Temperatur in den Fahrgasträumen und ein vorgegebener Luftdurchsatz im Fahrgastraum erreichen. Die mit den Klappen versehenen Kanäle beanspruchen viel Raum und sind wartungsbedürftig.

Aufgabe der Erfindung ist es, für ein elektrisches Nahverkehrsfahrzeug eine Heiz- und Lüftungseinrichtung zu schaffen, bei der man ohne Mischkammen und ohne mechanisch bewegte Klappen auskommt und die Verlustwärme der auf dem Fahrzeug angeordneten elektrischen Geräte für die Erwärmung des Wageninneren ausnutzen kann.

Die Lösung dieser Aufgabe besteht ausgehend von einer Heiz- und Lüftungseinrichtung, bei der in einem in den Fahrgastraum führenden Luftkanal ein sekundärer Wärmetauscher vorgesehen ist, der über eine Rohrleitung mit Umwälzpumpe an einen primären Wärmetauscher für die Aufnahme der Heizenergie angeschlossen ist, erfindungsgemäß darin, daß bei Verwendung für Nahverkehrsfahrzeuge der primäre Wärmetauscher in einem Kühlkanal für die Kühlung elektrischer Geräte durch Luft angeordnet ist, daß der Wärmeträger in Intervallen zu- und abgeschaltet wird, wobei das Impuls-Pausenverhältnis abhängig von der Innen- und Außentemperatur durch eine Steuereinrichtung verändert wird und daß zum Glätten der dadurch bedingten Temperaturschwankungen der in das Wageninnere eingeblasenen Luft ein Wärmespeicher vorgesehen ist.

Auf diese Weize kann die während des Betriebes des Nahverkehrsfahrzeuges in elektrischen Geräten auftretende Verlustenergie zusätzlich zu der beim Anfahren und Bremsen anfallenden elektrischen Energie zur Heizung des Fahrzeuges ausgenutzt werden. Dabei ist es möglich, bei Aufrechterhaltung eines dauernden Luftdurchsatzes die Heizenergie genau dem Wärmebedarf anzupassen, ohne daß durch die Intervallsteuerung spürbare Temperaturschwankungen im Fahrgastraum auftreten. Durch den Wegfall der Steuerklappen und der Mischkammern wird eine einfache und platzsparende Ausbildung des Luftkanals ermöglicht.

Durch die mögliche Ausnutzung der Verlustenergie der elektrischen Geräte kann der dem Netz entnommene Bedarf an Heizenergie auf ein Minimum beschränkt werden. Dadurch, daß der primäre Wärmetauscher in einem Kühlkanal für die Kühlung der elektrischen Geräte durch Luft angeordnet ist, läßt sich eine besonders einfache Übertragung der Abwärme elektrischer Geräte auf den Wärmetauscher bewerkstelligen, wobei es nicht erforderlich ist, die elektrischen Geräte in unmittelbarer Nähe des zum Fahrgastraum führenden Luftkanals anzuordnen.

In der Zeichnung sind zwei Ausführungsbeispiele der Erfindung dargestellt.

Fig. 1 zeigt eine Heiz- und Belüftungseinrichtung, bei der allein die Verlustwärme elektrischer Geräte zu Heizung des Inneren eines Nahverkehrsfahrzeuges dient und

Fig. 2 eine Heiz- und Belüftungseinrichtung, bei der zusätzlich zur Verlustwärme elektrischer Geräte Energie zum Heizen aus dem Netz verwendet wird.

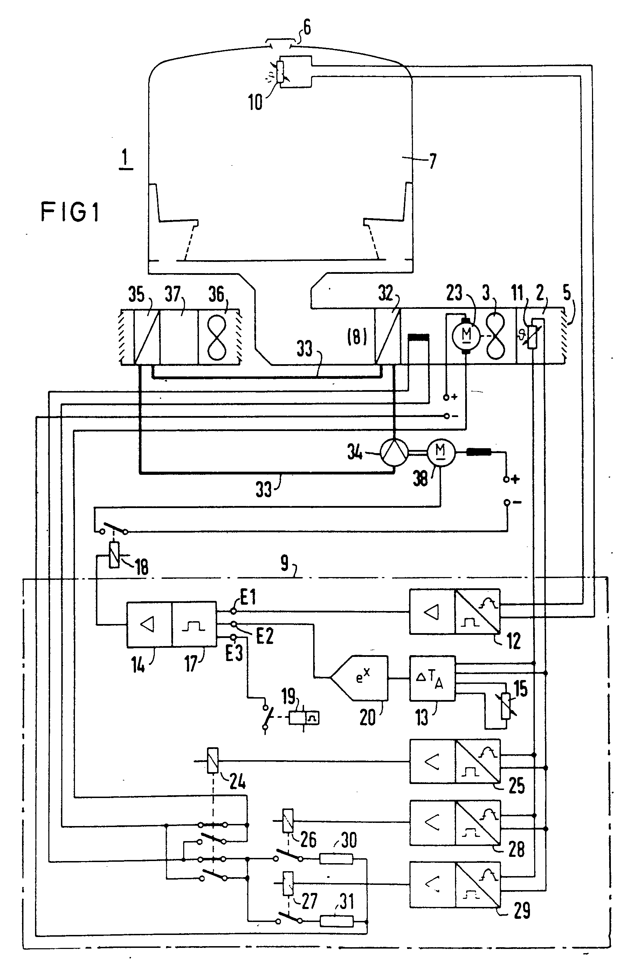

In Fig. 1 ist eine Heizung und Lüftung für ein Nahverkehrsfahrzeug 1 gezeigt, bei dem in einem Luftkanal 2 ein Lüfter 3 und ein Lufterhitzer angeordnet sind. Im Heizbetrieb wird Luft an der Ausaugöffnung 5 angesaugt und durch den Lüfter 3 über den Lufterhitzer in das Wageninnere 7 eingeblasen. Durch eine Öffnung 6 im Wagendach kann die verbrauchte Luft entweichen. Der Lufterhitzer ist durch einen sekundären Wäremtauscher 32 gebildet, der über Rohrleitungen 33, in der eine Umwälzpumpe 34 angeordnet ist, mit einem primären, Wärmetauscher 35 verbunden ist. Der primäre Wärmetauscher 35 liegt in einem Kühlkanal 36 elektrischer Geräte 37, wie z.B. eines Thyristorstellers und Halbleiterwechselrichters und dergleichen und wird von der erwärmten Kühlluft aufgeheizt. Zur Aufrechterhaltung einer vorgegebenen Temperatur des Wageninneren 7 wird der sekundäre Wärmetauscher 32 durch Unterbrechen des Umlaufs eines Wärmeträgers (Wasser oder Sole) abgeschaltet. Hierzu dient eine Steuereinrichtung 9, die das Impuls-Pausenverhälternis abhängig von der Innen- und Außentemperatur verändert und die Umwälzpumpe 34 über einen Pumpenmotor 38 in Intervallen zu- und abschaltet.

Die Steuereinrichtung 9 hat zum Erfassen der Innenund Außentemperatur jeweils einen Temperaturfühler 10, 11. Die elektrische Ausgangsgröße des Temperaturfühlers 10 wird über einen Grenzwertmelder 12 einem ersten Eingang E1 eines Taktgebers 17 zugeführt. Die elektrische Ausgangsgröße des Temperaturfühlers 11 wird in einem Vergleichsglied 13 mit einer durch ein Potentiometer 15 einstellbaren Bezugsspannung verglichen. Das Ausgangssignal des Vergleichsgliedes 13 ist über einen Funktionsgenerator 20 an den zweiten Eingang E2 des Taktgebers 17 geführt. Solange am Eingang E1 eine Signal ansteht, bleibt der Taktgeber 17 eingeschaltet. Das am Eingang E2 anstehende Signal bestimmt die Impulsdauer, während der der sekundäre Wärmetauscher 32 eingeschaltet ist. Dabei korrigiert der Funktionsgenerator 20 das Signal des Temperaturfühlers 11 entsprechend den fahrzeugspezifischen Gegebenheiten. Das Ausgangssignal des Taktgebers 17 steuert nach entsprechender Verstärkung durch den Verstärker 14 ein Schütz 18 für das Einschalten des Motors 38 der Umwälzpumpe 34 in der Rohrleitung 33 des sekundären Wärmetauschers 32. Das Ausgangssignal des Taktgebers 17 steht dabei so lange am Schütz 18 an, wie der sekundäre Wärmetauscher 32 mit Wärmeenergie versorgt werden soll. Die Wiederholung des Einschaltvorganges ist vorwiegend abhängig von der Größe eines Wärmespeichers 8, der zugelassenen Welligkeit der Temperatur der eingeblasenen Luft und der niedrigsten, zu erwartenden Außentemperatur des Einsatzgebietes des Fahrzeuges. Zur Wiederholung des Einschaltvorganges dient ein Zeitglied 19, das den Taktgeber 17 durch Eingabe eines Startimpulses am Eingang E3 ansteuert. Der zeitliche Abstand der einzelnen Startimpulse, welche das wiederholte Zuschalten des sekundären Wärmetauschers 32 einleiten, ist in an sich bekannter Weise einstellbar. Bei ausgeführten Anordnungen liegt die Taktzeit bei etwa 60 sec.

Erreicht die Innentemperatur des Nahverkehrsfahrzeuges 1 einen vorgegebenen Temperaturwert von z.B. 18°, so steht kein Signal am Eingang E1 des Taktgebers 17 an und der Taktgeber 17 gibt kein Signal ab, so daß das Schütz 18 für eine oder mehrere Taktperioden nicht einschaltet und zwar so lange, bis die Temperatur im Wageninneren 7 den vorgegebenen Wert wieder unterschreitet.

Erreicht die Außentemperatur einen vorgegebenen Wert von z.B. 18°, so wird der Fahrgastraum belüftet. Hierzu wird die Richtung des Luftstromes im Luftkanal umgekehrt. Dies kann in einfacher Weise dadurch geschehen, daß die Drehrichtung des Lüftermotors 23 umgekehrt wird. Hierzu ist dem Lüftermotor 23 ein Wendeschütz 24 vorgeschaltet, das durch einen Grenzwertmelder 25 zum Erfassen der Umschalttemperatur angesteuert wird.

Mit sinkenden Außentemperaturen muß dem Wageninneren 7 mit der eingeblasenen Luft eine zunehmend größere Heizenergie zugeführt werden. Es ist daher zweckmäßig, den Luftdurchsatz abhängig von der zuzuführenden Heizenergie zu steuern. Hierzu wird die Drehzahl des Lüftermotors 23 über Schütze 26, 27 abhängig von Grenzwertmeldern 28, 29 gesteuert, die die Außentemperatur erfassen. Die Schütze 26, 27 legen den Lüftermotor 23 über unterschiedliche Vorwiderstände 30, 31 an Spannung.

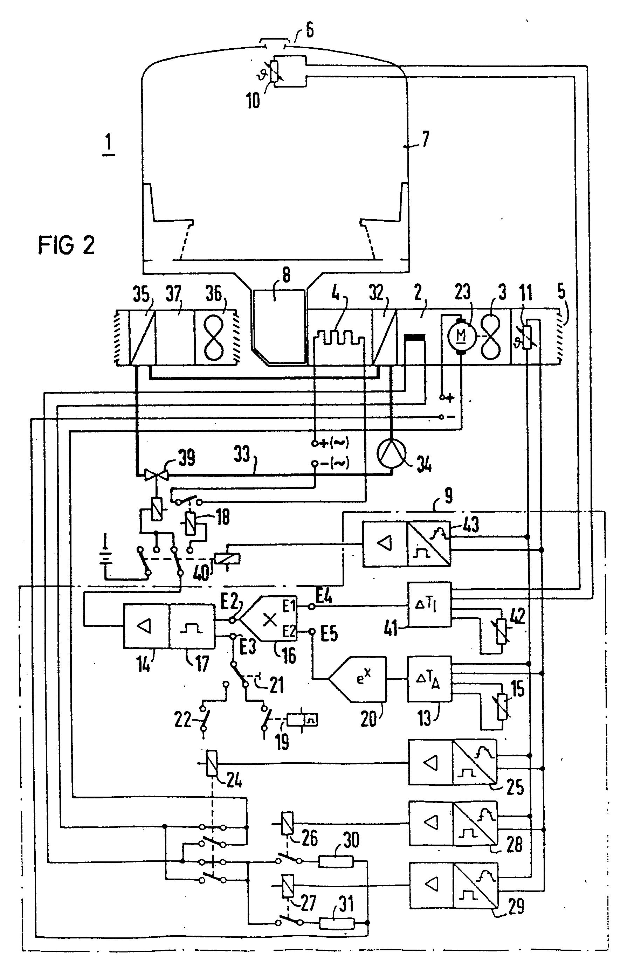

Bei der in Fig. 2 gezeigten Heiz- und Lüftungseinrichtung reicht die Verlustwärme der auf dem Fahrzeug angeordneten elektrischen Geräte allein nicht aus, um den Heizbetrieb auch bei sehr niedrigen Temperaturen sicherzustellen. Es ist daher zusätzlich eine Heizwiderstand 4 vorgesehen. Bei geringem Energiebedarf wird der sekundäre Wärmetauscher 32 durch Unterbrechen des Umlaufes des Wärmeträgers abhängig von der Innen- und Außentemperatur von dem Magnetventil 39 in Intervallen abgeschaltet. Das Magnetventil 39 wird dabei über das Umschaltschütz 40 von der Steuereinrichtung 9 angesteuert. Durch Schließen des Magnetventiles 39 wird bei dauernd laufender Umwälzpumpe 34 der Umlauf des Wärmeträgers und damit die Wärmezufuhr zum sekundären Wärmetauscher 32 unterbunden. Nach einer vorgegebenen Zeit wird das Magnetventil 39 durch die Steuereinrichtung 9 geöffnet und dem sekundären Wärmetauscher 32 über den Wärmeträger wieder Energie zugeführt. In der Steuereinrichtung 9 ist ein Grenzwertmelder 43 vorgesehen, der bei Unterschreiten einer vorgegebenen Außentemperatur ein Signal abgibt, durch das das Umschaltschütz 40 betätigt und damit der Heizwiderstand 4 zugeschaltet wird. Dabei bleibt das Magnetventil 39 dauernd offen und dem Wärmetauscher 32 wird ständig die volle Wärmeenergie zugeführt. Bei Betrieb mit dem in Intervallen zu- und abschaltbaren Heizwiderstand 4 werden die Temperaturschwankungen der ins Wageninnere 7 eingeblasenen Luft durch einem Wärmespeicher 8 geglättet.

In der Steuereinrichtung 9 werden die elektrischen Ausgangsgrößen der Temperaturfühler 10, 11 in je einem Vergleichsglied 41 bzw. 13 mit einer durch ein Potentiometer 42, 15 einstellbaren Bezugsspannung verglichen. Die Ausgangssignale werden als Spannungen den beiden Eingängen E4, E5 eines Multiplikators 16 zugeführt, der das Produkt aus den beiden Werten bildet, Das Produkt ist ein Maß für die Impulsdauer, während der entweder der Wärmetauscher 32 oder der Heizwiderstand 4 eingeschaltet ist. Am Ausgang des Multiplikators 16 steht ein dem Produkt entsprechendes Signal an, das einem Eingang E2 des Taktgebers 17 zugeführt wird, dessen Ausgangssignal nach entsprechender Verstärkung entweder das Magnetventil 39 für das Einschalten des Wärmetauschers 32 oder das Schütz 18 für das Einschalten des Heizwiderstandes 4 steuert. Das Ausgangssignal des Taktgebers 17 steht dabei so lange am Magnetventil 39 oder Schütz 18 an, wie der Wärmetauscher 32 bzw. der Heizwiderstand 4 eingeschaltet sein soll. Die Wiederholung des Einschaltvorganges ist abhängig vom Wärmespeichervermögen des Wärmetauschers 32 und der Größe des Wärmespeichers 8, der zugelassenen Welligkeit der Temperatur der eingeblasenen Luft und der niedrigsten, zu erwartenden Außentemperatur des Einsatzgebietes des Fahrzeuges. Zur Weiderholung des Einschaltvorganges dient eine Zeitglied 19, das den Taktgeber 17 durch Eingabe eines Startimpulses am Eingang E3 ansteuert. Der zeitliche Abstand der einzelnen Startimpulse, welche das wiederholte Zuschalten des Wärmetauschers 32 bzw. des Heizwiderstandes 4 einleiten, ist in an sich bekannter Weise einstellbar. Erreicht die Innentemperatur des Nahverkehrsfahrzeuges 1 einen vorgegebenen Temperaturwert von z.B. 18°, so wird das Signal am Eingang E3 des Multiplikators 16 Null und damit auch das Produkt Null und der Taktgeber 17 gibt kein Signal ab, so daß das Schütz 18 bzw. das Magnetventil 39 für eine oder mehrere Taktperioden nicht einschaltet und zwar so lange, bis das Produkt wieder ungleich Null wird.

Zweckmäßigerweise ist zumindest einem der Eingänge des Multiplikators 16 ein Funktionsgenerator 20 mit nichtlinearer Kennlinie vorgeschaltet. Dadurch kann der Energiebedarf bei verschiedenen Außentemperaturen berücksichtigt werden.

Für Fahrzeuge mit Nutzbremsung ist es vorteilhaft, den Heizwiderstand 4 nicht abhängig vom Zeitglied 19, sondern abhängig vom Bremssignal jeweils beim Einsetzen der elektrischen Bremse zuzuschalten. Hierzu wird das Zeitglied 19 durch Umlegen eines Schalters 21 abgetrennt und das Signal des Zeitgliedes durch ein beim Bremsen auftretendes Signal ersetzt (Schalter 22 schließt).

Die Belüftung des Fahrgastraumes 7 erfolgt in der bereits zu Fig. 1 beschriebenen Weise.

1 Nahverkehrsfahrzeug
2 Luftkanal
3 Lüfter
4 Heizwiderstand
5 Ansaugöffnung
6 Öffnung im Wagendach
7 Wageninnere
8 Wärmespeicher
9 Steuereinrichtung
10 Temperaturfühler, innen
11 Temperaturfühler, außen
12 Grenzwertmelder
13 Vergleichsglied
14 Verstärker
15 Potentiometer
16 Multiplikator
17 Taktgeber
18 Schütz
19 Zeitglied
20 Funktionsgenerator
21 Schalter
22 Schalter
23 Lüftermotor
24 Wendeschütz
25 Grenzwertmelder
26 Schütz
27 Schütz
28 Grenzwertmelder
29 Grenzwertmelder
30 Vorwiderstand
31 Vorwiderstand
32 sekundärer Wärmetauscher
33 Rohrleitung
34 Umwälzpumpe
35 primärer Wärmetauscher
36 Kühlkanal
37 elektrische Geräte
38 Pumpenmotor
39 Magnetventil
40 Umschaltschütz
41 Vergleichsglied
42 Potentiometer
43 Grenzwertmelder
E1 Eingang
E2 Eingang
E3 Eingang
E4 Eingang
E5 Eingang

**Patentansprüche**

1. Heiz- und Lüftungseinrichtung für ein elektrisches Fahrzeug (1), das einen in den Fahrgastraum führenden Luftkanal (2) und eine vom Fahrgastraum ins Freie führende Öffnung (6) besitzt, wobei der Luftkanal (2) mit einem Lüfter (3) und einem Lufterhitzer versehen ist, welcher durch einen sekundären Wärmetauscher (32) gebildet ist, der über eine Rohrleitung (33) mit Umwälzpumpe (34) an einem primären Wärmetauscher (35) für die Aufnahme der Heizenergie angeschlossen ist, dessen flüssiger Wärmeträger zum Beeinflussen der Temperatur im Wageninneren durch Eingriff in seinen Umlauf steuerbar ist, dadurch gekennzeichnet, daß bei Verwendung für Nahverkehrsfahrzeuge der primäre Wärmetauscher (35) in einem Kühlkanal (36) für die Kühlung elektrischer Geräte (37) durch Luft angeordnet ist, daß der Wärmeträger in Intervallen zu- und abgeschaltet wird, wobei das Impuls-Pausenverhältnis abhängig von der Innen- und Außentemperatur durch eine Steuereinrichtung (9) verändert wird und daß zum Glätten der dadurch bedingten Temperaturschwankungen der in das Wageninnere (7) eingeblasenen Luft ein Wärmespeicher (8) vorgesehen ist.

2. Einrichtung nach Anspruch 1, dadurch gekennzeichnet, daß die Steuereinrichtung (9) von einem Geber derart gesteuert wird, daß dann, wenn die erforderliche Heizenergie die vorhandene Verlustenergie überschreitet, der sekundäre Wärmetauscher (32) dauernd zugeschaltet bleibt und zusätzlich ein elektrischer Heizwiderstand (4) durch die Steuereinrichtung in Intervallen zu- und abgeschaltet wird.

3. Einrichtung nach Anspruch 1 oder 2, dadurch gekennzeichnet, daß die Steuereinrichtung (9) zum Erfassen der Innen- und Außentemperatur Temperaturfühler (10, 11) hat, deren Ausgangsgröße jeweils mit einem Bezugswert verglichen und die Differenzwerte als elektrische Signale den Eingängen (E1, E2) eines Multiplikators (16) zugeführt werden, dessen Ausgangssignal die Impulsdauer bestimmt, während der der sekundäre Wärmetauscher (32) bzw. der Heizwiderstand (4) eingeschaltet ist.

4. Einrichtung nach Anspruch 3, dadurch gekennzeichnet, daß zumindest einem der beiden Eingänge (E1, E2) des Multiplikators (16) ein Funktionsgenerator (20) mit nichtlinearer Kennlinie vorgeschaltet ist.

5. Einrichtung nach einem der vorhergehenden Ansprüche, dadurch gekennzeichnet, daß die Steuereinrichtung (9) abhängig von der Außentemperatur die Drehzahl und Drehrichtung des Lüftermotors (23) steuert.

**Claims**

1. A heating and ventilating system for an electric vehicle (1) which has an air channel (2) leading to the passenger compartment and an opening (6) leading from the passenger compartment to the ambient atmosphere, wherein the air channel (2) is provided with a fan (3) and an air heater formed by a secondary heat exchanger (32) connected to a primary heat exchanger (35) for the input of heating energy via a pipeline (33) comprising a circulating pump (34), the liquid heat carrier of which primary heat exchanger can be controlled by regulation of its circulation in order to influence the temperature in the vehicle interior, characterised in that when used for short-distance vehicles, the primary heat exchanger (35) is arranged in a cooling channel (36) for the air cooling of electrical devices (37) the heat exchanger is intermittantly connected and disconnected with a pulse duty factor that is varied by a control device (9) in dependence upon the internal and external temperature, and a heat store (8) is provided to stabilise resultant temperature fluctuations of the air blown into the vehicle.

2. A system as claimed in claim 1, characterised in that the control device (9) is controlled by a transmitter in such manner that when the required heating energy exceeds the existing waste energy, the secondary heat exchanger (32) remains permanently connected and in addition an electric heating resistor (4) is intermittantly connected and disconnected by the control device.

3. A system as claimed in claim 1 or 2, characterised in that for determination of the internal and external temperatures the control device (9) possesses temperature sensors (10, 11) whose respective output values are compared with a reference value and the difference values fed as electrical signals to the inputs (E1, E2) of a multiplier (16) whose output signal determines the pulse duration for connection of the secondary heat exchanger (32) or the heat resistor (4), as the case may be.

4. A system as claimed in claim 3, characterised in that at least one of the two inputs (E1, E2) of the multiplier (16) is preceded by a function generator (20) which has a non-linear characteristic.

5. A system as claimed in one of the preceding claims, characterised in that the control device (9) controls the number of revolutions and the direction of rotation of the fan motor (23) in dependence upon the external temperature.

**Revendications**

1. Installation pour chauffer et aérer un véhicule (1) électrique possédant un canal d'air (2) menant dans un compartiment passagers et une ouverture (6) faisant communiquer le compartiment passagers avec l'atmosphère, le canal d'air (2) étant pourvu d'un ventilateur (3) et d'un réchauffeur d'air qui est formé par un échangeur de chaleur secondaire (32) qui est relié, par l'intermédiaire du conduit (33) à un circulateur (34), à un échangeur de chaleur primaire (35) pour absorber l'énergie thermique et dont l'agent caloporteur, par intervention dans sa circulation, est réglable en vue d'influencer la température à l'intérieur du véhicule, caractérisé par le fait que dans le cas de l'utilisation de véhicules pour le trafic de grande banlieue, l'échangeur de chaleur primaire (35) est disposé dans un canal de réfrigération (36) servant au refroidissement d'appareils électriques (37) par l'air, que l'agent caloporteur est mis en route ou est arrêté par intervalles, le rapport impulsions/pauses étant modifié par un dispositif de réglage (9) en fonction de la température intérieure et extérieure et que pour lisser les variations de température qui en résultent pour l'air introduit dans le véhicule (7) il est prévu un accumulateur thermique (8).

2. Installation selon la revendication 1, caractérisée par le fait que le dispositif de réglage (9) est commandé par un générateur de signaux de telle manière que lorsque l'énergie de chauffage dépasse l'énergie de pertes qui existe, l'échangeur de chaleur secondaire (32) reste branché en permanence et qu'en plus une résistance électrique de chauffage (4) est branchée et débranchée par intervalles par le dispositif de réglage.

3. Installation selon la revendication 1 ou 2, caractérisée par le fait que le dispositif de réglage (9) comporte, pour détecter la température intérieure et extérieure, des détecteurs thermiques (10, 11) dont les grandeurs de sortie sont comparées chacune avec une chaleur de référence, les valeurs différentielles étant appliquées sous la forme de signaux électriques aux entrées (E1, E2) d'un multiplicateur (16) dont le signal de sortie détermine la durée d'impulsion pendant laquelle l'échangeur de chaleur secondaire (32) ou la résistance de chauffage (4) est branché.

4. Installation selon la revendication 3, caractérisée par le fait qu'en amont d'au moins l'une des deux entrées (E1, E2) du multiplicateur (16) est branché un générateur de fonction (20) à caractéristique non linéaire.

5. Installation selon l'une des revendications précédentes, caractérisée par le fait que le dispositif de réglage (9) régle, en fonction de la température extérieure, la vitesse et le sens de rotation du ventilateur (23).

FIG 1

FIG 2